# EUROPÄISCHE PATENTSCHRIFT

(11) **EP 1 596 488 B1**
(45) Veröffentlichungstag und Bekanntmachung des Hinweises auf die Patenterteilung: **01.01.2014**
(21) Anmeldenummer: 05010193.0
(22) Anmeldetag: 11.05.2005
(51) Int. Cl.: H02K 7/00

(54) **Antriebsmotor mit integrierten Wellenverbindungselementen**
Drive motor with integrated shaft connection element
Elément de connexion à l'arbre intégré avec le moteur d'entraînement

(30) Priorität: 14.05.2004 DE 102004024136
(43) Veröffentlichungstag der Anmeldung: 16.11.2005
(73) Patentinhaber: KHS GmbH, 44143 Dortmund (DE)
(72) Erfinder: Krämer, Klaus, 44267 Dortmund (DE); Pieper, Frank, 42897 Remscheid (DE)

(56) Entgegenhaltungen:
- WO-A2-96/16465
- DE-A1- 10 129 172
- DE-A1- 19 607 735
- GB-A- 674 099

## Beschreibung

Die vorliegende Erfindung betrifft einen Antriebsmotor gemäß dem Oberbegriff des Anspruches 1. Vorteilhaft Weiterbildungen sind in den Unteransprüchen angegeben.

In der Technik ist es seit langem üblich, für bestimmts Antriebsaufgaben Elektromotoren einzusetzen, wobei es sich bei diesen Motoren um Gleichstrom, Wechselstrom-, Drehstrommotoren handeln kann. Ebenfalls kann es sich bei diesen Motoren um Servo-, Synchron-(im Sinne von einer vorgegebenen Bewegung oder einem vorgegebenen Bewegungsbefehl folgend) oder auch um Schrittmotoren handeln.

Ebenfalls ist es üblich, den für eine Antriebsaufgabe eingesetzten Elektromotor mit dem anzutreibenden Element zu verbinden. Dazu wurden im Laufe der Zeit zahlreiche Lösungsvorschläge erarbeitet und vorgestellt. So wurden z.B. zahlreiche Vorrichtungen vorgestellt, bei denen Abtriebswelle und anzutreibende Welle durch starre oder flexible Kupplungen verbunden werden, bei denen je ein Befestigungselement auf einer der beiden Wellen befestigt wird.

Ebenfalls wurden Kupplungen vorgestellt, bei denen ein rohrähnliches oder aber auch haibschalenförmiges Element mit beiden Wellen verbunden wird und diese somit miteinander verbindet.

Allen der Anmelderin bekannt gewordenen Elementen zur Verbindung von einer Abtriebswelle und einer anzutreibenden Welle, wobei die Drehachsen beider Wellen im Wesentlichen auf einer Linie liegen, ist gemeinsam, dass der Platzbedarf dieser Elemente groß ist, da die beiden zu verbindenden Wellenenden zumindest so weit in den freien Raum ragen müssen, dass diese Wellenenden in der Lage sind, das oder die auf ihnen zu befestigende(n) Verbindungselement(e) sicher aufnehmen zu können.

Dieses ist insbesondere dann von großem Nachteil, wenn der zur Verfügung stehende Bauraum begrenzt ist.

Dieses ist z.B. auch bei bekannten Rundläufer-Etikettiermaschinen, bei denen die dort vorgesehenen Flaschendrehteller 20 jeweils durch einen Elektromotor angetrieben bzw. angesteuert werden, der Fall.

Der gattungsbildende Stand der Technik nach der DE 101 29 172 A1 befasst sich mit einem Elektromotor als Antriebsvorrichtung für eine anzutreibende Welle. Zu diesem Zweck Ist in ein Gehäuse zentrisch zur Rotationsachse des Elektromotors eine Durchgangsbohrung eingearbeitet. In der Durchgangs-bohrung ist eine Hohlwelle gelagert. Zur reibschlüssigen Wirkverbindung der anzutreibenden Welle mit der Hohlwelle ist ein Spannmittel vorgesehen, welches aus mindestens einem an der Innenwandung der Hohlwelle abgestützten O-Ring und wenigstens einer, vorzugsweise aus zwei fluchtend zueinander in der Hohlwelle angeordneten Lagerbuchsen gebildet ist.

Auf diese Weise wird ein Elektromotor derart weitergebildet, dass dieser unmittelbar auf eine anzutreibende Welle, einen anzutreibenden Flansch oder ein ähnliches Bauteil aufgesetzt werden kann, so dass so wenig wie möglich Raum benötigt wird. Das ist insbesondere für den Einsatz an Papierwalzen von besonderer Bedeutung.

Aufgabe und Ziel der vorliegenden Erfindung ist es, die oben dargestellten Nachteile zu vermeiden. Dazu sieht die Erfindung vor, dass die Elemente zur Verbindung der beiden Wellen in das Innere des Antriebsmotors und im Detail in das Innere des Lagerschildes des Antriebsmotors verlegt werden.

Im Nachfolgenden wird die vorliegende Erfindung anhand eines Ausführungsbeispiels näher erläutert.

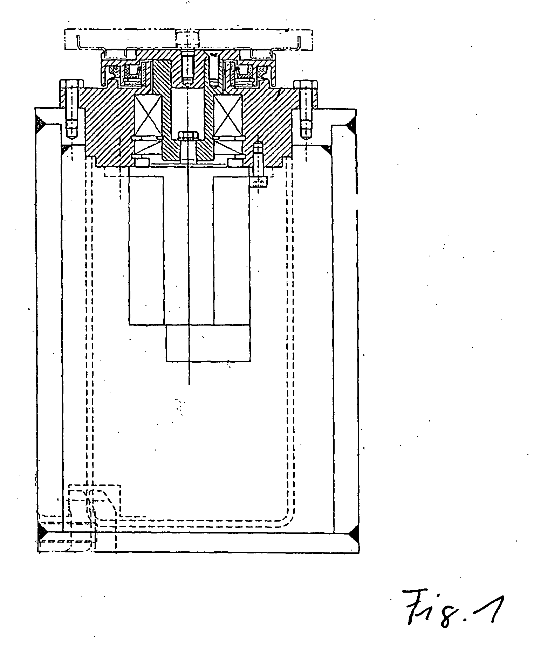

Im Einzelnen zeigt die
- Figur 1: eine zum Stand der Technik gehörende Wellenverbindung und die
- Figur 2: in einer stark vereinfachten Schnittdarstellung einen erfindungsgemäßen Antriebsmotor mit internen Verbindungselementen, wobei dieser Antriebsmotor für die stirnseitige Anordnung eines anzutreibenden Elementes vorgesehen ist, und die
- Figur 3: in einer ebenfalls stark vereinfachten Schnittdarstellung einen erfindungsgemäßen Antriebsmotor mit internen Verbindungselementen, wobei die Antriebswelle des anzutreibenden Bauteils ein funktionaler Bestandteil der Verbindungselemente ist.

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung. Gleichzeitig wird der Inhalt der Ansprüche zu einem Bestandteil der Beschreibung gemacht.

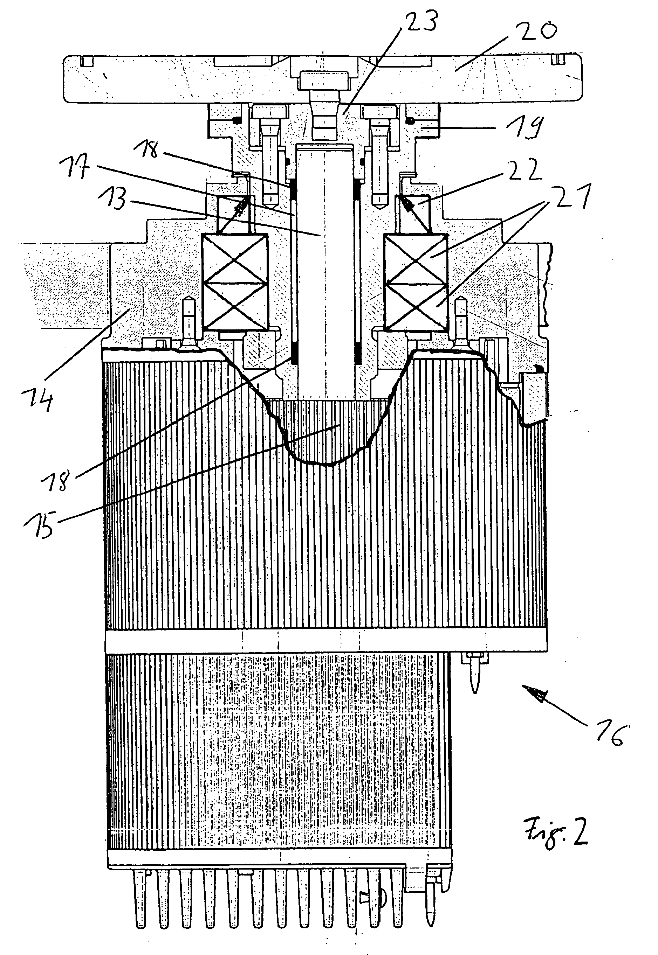

Wie in der Figur 2 dargestellt, sieht die vorliegende Erfindung vor, das Lager-schild 14 derart auszubilden, dass es neben der üblicher Weise vorgesehenen Aufnahme der Lagerung des Rotors 15 des Antriebsmotors 16, zusätzlich in der Lage ist, die Verbindungselemente zwischen Abtriebswelle 13 des Antriebsmotors 16 und dem anzutreibenden Bauteil aufzunehmen, wodurch sich eine deutliche Reduzierung des erforderlichen Bauraumes ergibt.

Erfindungsgemäß ist das anzutreibende Bauteil zunächst ein so genanntes Antriebselement 19, welches zunächst die Funktionen Lagerung und Abdichtung unterstützt, und darüber hinaus die Befestigungsmöglichkeit für das außerhalb des Antriebsmotors befindliche anzutreibende Bauteil darstellt.

Im dargestellten Ausführungsbeispiel wird die Wirkverbindung zwischen Abtriebswelle 13 des Antriebsmotors 16 und dem Antriebselement 19 durch eine Wellenspannhülse 17 her

(hieran schließen sich die ursprünglichen Beschreibungsselten 3 und 4 in unveränderter Reihenfolge an) gestellt, wobei die Wellenspannhülse 17 durch Druckstücke 18 derart verformt bzw. vorgespannt wird, dass die Wellenspannhülse 17 die Abtriebswelle 13 und das Antriebselement 19 ohne die Erzeugung von Fluchtungsfehlern oder Winkelversätzen fest miteinander verbindet.

In weiteren Ausbildungen können als Verbindungselemente aber auch andere, aus dem Stand der Technik bekannte Elemente zur Verbindung von Welle und Nabe verwendet werden. Dabei kann es sich z.B. um Vielkeil-, Polygon-, Passfeder- , Keilwellen-, Zahnwellen-, Schraub- , Kegel-, Ringfeder-Spannelement- oder Presssitzverbindungen handeln.

Auch die Verwendung, weiterer, an dieser Stelle nicht ausdrücklich erwähnter Verbindungselemente führt nicht dazu, dass der Schutzbereich der vorliegenden Erfindung verlassen wird.

Durch die Verbindung von Abtriebswelle 13 und Antriebselement 19 wird das vom Rotor 15 des Antriebsmotors 16 erzeugte Drehmoment sicher und schlupffrei auf das Antriebselement 19 und auf das anzutreibende Bauteil übertragen.

Wie die in Figur 2 dargestellte Konstruktion erkennen lässt, dient die in das Lagerschild 14 integrierte Lagerung 21 sowohl zur Lagerung des Rotors 15 des Antriebsmotors 16, als auch zur Lagerung des Antriebselementes 19, wobei Rotor 15 und Antriebselement 19 durch die Wellenspannhülse 17 auf besonders vorteilhafte Weise miteinander verbunden sind. Ebenfalls übernimmt die Lagerung 21 - so weit erforderlich - auch die Lagerung des anzutreibenden Bauteils.

Durch diese Vorgehensweise ergeben sich weitere konstruktive und kostenmäßige Vorteile.

Bei dem anzutreibenden Bauteil kann es sich, wie z.B. in der Figur 2 gezeigt, um einen Flaschendrehteller 20 handeln, wodurch sich die vorliegende Erfindung in besonderem Maße dazu eignet, die oben dargestellten Raumprobleme bei Rundläufer-Etikettiermaschinen zu lösen.

Ebenfalls dienen das Lagerschild 14 und das Antriebselement 19 auch zur Aufnahme von Dichtelementen 22, welche den Antriebsmotor vor dem Eindringen von Schmutz und/oder Feuchtigkeit schützen sollen.

Bei den Dichtelementen 22 kann es sich z.B. um O-Ringe, Wellendichtringe oder aber auch Simmerringe handeln. Bei der Lagerung 21 kann es sich z.B. um Kugellager, Pendelrollenlager, Zylinderrollenlager oder andere geeignete Lagerbauformen handeln.

Um die Druckstücke 18 mit der, zum hinreichenden Verformen bzw. Vorspannen der Wellenspannhülse 17 erforderlichen Axialkraft beaufschlagen zu können, ist ein Spannelement 23 vorgesehen, welches die Druckstücke 18 z.B. durch die Weiterleitung der Kraftwirkung von Gewindeschrauben mit entsprechenden Kräften beaufschlagt.

Für die Gestaltung des Spannelementes 23 sieht die Erfindung vor, dieses je nach geplanter Verwendung des Antriebsmotors spezifisch auszubilden.

Ist z.B., so wie in der Figur 2 dargestellt, der Antrieb eines Bauteils geplant, welches sich aufgrund der Zugänglichkeit des Ortes der Drehachse zur direkten Montage auf der Stirnseite von Antriebselement 19 und/oder Spannelement 23 eignet, so ist vorgesehen, Antriebselement 19 und/oder Spannelement mit entsprechenden Befestigungsmöglichkeiten, z.B. Gewindebohrungen, auszustatten.

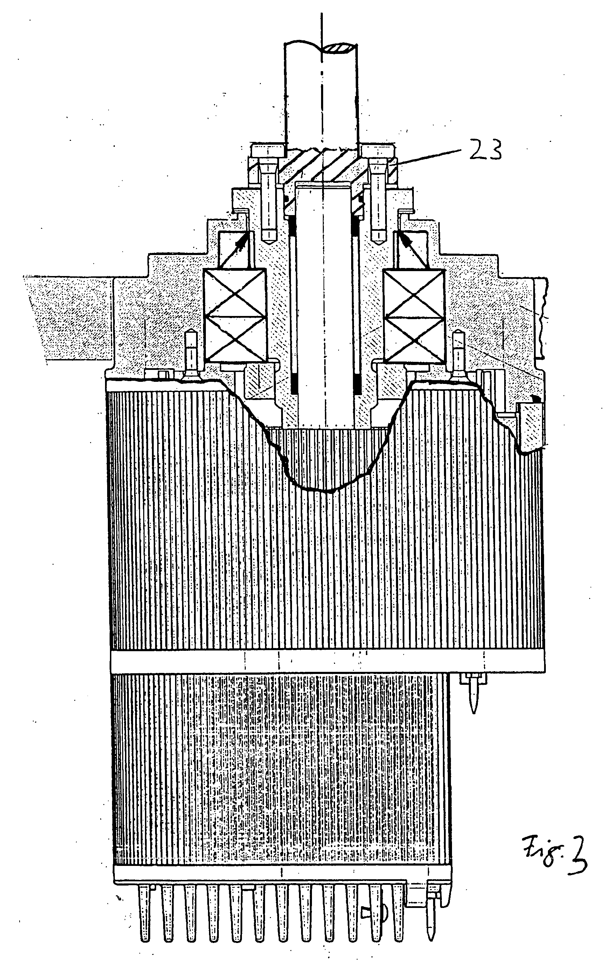

Die Figur 3 zeigt eine weitere vorteilhafte Ausbildung der vorliegenden Erfindung, bei welcher das Drehmoment des Antriebsmotors 16 möglichst platzsparend auf das anzutreibend Bauteil übertragen werden soll, wobei sich dieses Bauteil, da der Ort der Drehachse nicht für die Anbringung einer Befestigung verwendbar ist, nicht für eine direkte stirnseitige Montage eignet.

Für einen solchen Fall ist vorgesehen, das Antriebselement des anzutreibenden Bauteils derart auszubilden, dass es der Gestalt und den Abmessungen des Spannelementes 23 entspricht und somit dessen Funktion übernehmen kann und somit gleichzeitig zur Befestigung des anzutreibenden Bauteiles dient.

Weiterhin ist in einer weiteren Ausbildung vorgesehen, das Spannelement 23 durch eine entsprechende konstruktive Gestaltung wie z.B. radial verlaufende, in einer Aufnahmebohrung mündende Gewindebohrungen, oder aber auch durch zur Befestigung eines Wellenendflansches geeignete Gewindebohrungen mit dem Antriebselement des anzutreibenden Bauteils verbindbar auszuführen.

Auch die Anwendung abweichender, aber wirkungsgleicher konstruktiver Ausgestaltungen führt nicht dazu, dass der Schutzbereich der vorliegenden Erfindung verlassen wird.

## Patentansprüche

1. Elektrischer Antriebsmotor (16), mit einem Rotor (15) und einer das vorn Rotor (15) erzeugte Drehmoment abgebenden Abtriebswelle (13), insbesondere für den Antrieb von Flaschendrehtellem (20) an Rundläufer-Etikettiermaschinen, wobei
- eine Verbindung zwischen der Abtriebswelle (13) des Antriebsmotors (16) und einem anzutreibenden Bauteil, beispielsweise dem Flaschendrehteller (20), herstellende Verbindungselemente (17, 18, 19, 23) zumindest teilweise Innerhalb des Antriebsmotors (16) sowie innerhalb eines Lagerschildes (14) angeordnet sind, und wobei
- ein Antriebselement (19) des anzutreibenden Bauteils ein funktionaler Bestandteil der Verbindungselemente (17, 18, 19, 23) ist,
**dadurch gekennzeichnet, dass**
das Lagerschild (14) und das Antriebselement (19) zusätzlich zur Aufnahme von Dichtelementen (22) dienen, welche den Antriebsmotor (16) vor dem Eindringen von Schmutz und/oder Feuchtigkeit schützen.

2. Antriebsmotor (16) nach Anspruch 1, **dadurch gekennzeichnet, dass** eine angeordnete Lagerung (21) sowohl zur Lagerung des Rotors (15), als auch zur Lagerung des anzutreibenden Bauteils dient.

3. Antriebsmotor (16) nach einem der vorhergehenden Ansprüche, **dadurch gekennzeichnet, dass** die Verbindungselemente (17, 18, 19, 23) derart ausgebildet sind, dass die Montage von anzutreibenden Bauteilen, bei denen der Ort der Drehachse zugänglich und somit für das Anbringen einer Befestigung verwendbar ist, direkt auf der Stirnseite der Verbindungselemente (17, 18, 19, 23) erfolgen kann.

4. Antriebsmotor (16) nach einem der vorhergehenden Ansprüche, **dadurch gekennzeichnet, dass** es sich bei den Verbindungselementen (17, 18, 19, 23) um Elemente zur Verbindung von Wellen und Naben handelt.

5. Antriebsmotor (16) nach Anspruch 4, **dadurch gekennzeichnet, dass** es sich bei den Elementen zur Verbindung von Wellen und Naben um Ringfeder-Spannelemente handelt.

6. Antriebsmotor (16) nach Anspruch 5, **dadurch gekennzeichnet, dass** es sich bei den Elementen zur Verbindung von Wellen und Naben um mindestens eine Wellenspannhülse (17) handelt.

## Claims

1. Electric drive motor (16), with a rotor (15) and a drive shaft (13) outputting the torque generated by the rotor (15), in particular for the driving of bottle turntables (20) of rotary labelling machines,
wherein
- connecting elements (17, 18, 19, 23) making a connection between the drive shaft (13) of the drive motor (16) and a component to be driven, for example the bottle turntable (20), lie at least partly within the drive motor (16) and within a bearing shield (14), and wherein
- a drive element (19) of the component to be driven is a functional component part of the connecting elements (17, 18, 19, 23),
**characterised in that**
the bearing shield (14) and the drive element (19) additionally serve to receive sealing elements (22) which protect the drive motor (16) from the ingress of dirt and/or moisture.

2. Drive motor (16) according to claim 1, **characterised in that** an arranged support (21) serves both to support the rotor (15) and to support of the component to be driven.

3. Drive motor (16) according to any one of the preceding claims, **characterised in that** the connecting elements (17, 18, 19, 23) are designed such that the assembly of components to be driven, the location of the axis of rotation being accessible in said components and said location of the axis of rotation thus being capable of being used for attaching a fastener, can be performed directly on the face of the connecting elements (17, 18, 19, 23).

4. Drive motor (16) according to any one of the preceding claims, **characterised in that** the connecting elements (17, 18, 19, 23) are elements for connecting shafts and hubs.

5. Drive motor (16) according to claim 4, **characterised in that** the elements for connecting shafts and hubs are annular spring clamping elements.

6. Drive motor (16) according to claim 5, **characterised in that** the elements for connecting shafts and hubs comprise at least one shaft clamping sleeve (17).

## Revendications

1. Moteur d'entraînement (16) électrique, comprenant un rotor (15) et un arbre de sortie (13) délivrant le couple de rotation produit par le rotor (15), en particulier pour l'entraînement de plateaux rotatifs de bouteilles (20) au niveau de machines à étiqueter à plateau tournant,
sachant
- que des éléments de liaison (17, 18, 19, 23) établissant une liaison entre l'arbre de sortie (13) du moteur d'entraînement (16) et un composant devant être entraîné, par exemple le plateau rotatif de bouteilles (20) sont disposés au moins en partie à l'intérieur du moteur d'entraînement (16) ainsi qu'à l'intérieur d'un flasque de palier (14), et sachant
- qu'un élément d'entraînement (19) du composant devant être entraîné fait partie intégrante d'un point de vue fonctionnel des éléments de liaison (17, 18, 19, 23),
**caractérisé en ce que**
le flasque de palier (14) et l'élément d'entraînement (19) servent en plus à recevoir des éléments d'étanchéité (22), qui protègent le moteur d'entraînement (16) contre la pénétration de saleté et/ou d'humidité.

2. Moteur d'entraînement (16) selon la revendication 1, **caractérisé en ce qu'**un support (21) sert aussi bien à supporter le rotor (15) qu'à supporter le composant devant être entraîné.

3. Moteur d'entraînement (16) selon l'une quelconque des revendications précédentes, **caractérisé en ce que** les éléments de liaison (17, 18, 19, 23) sont réalisés de telle manière que le montage de composants devant être entraînés, pour lesquels l'emplacement de l'axe de rotation est accessible et peut être utilisé ce faisant pour la mise en place d'une fixation, peut se faire directement sur le côté frontal des éléments de liaison (17, 18, 19, 23).

4. Moteur d'entraînement (16) selon l'une quelconque des revendications précédentes, **caractérisé en ce que** les éléments de liaison (17, 18, 19, 23) sont des éléments servant à relier des arbres et des moyeux.

5. Moteur d'entraînement (16) selon la revendication 4, **caractérisé en ce que** les éléments servant à relier des arbres et des moyeux sont des éléments de serrage à ressort-bague.

6. Moteur d'entraînement (16) selon la revendication 5, **caractérisé en ce que** les éléments servant à relier des arbres et des moyeux sont au moins un manchon de serrage d'arbres (17).
